**Europäisches Patentamt**

**European Patent Office**

**Office européen des brevets**

(19)

(11)  **EP 0 355 070 B2**

(12)  ## NOUVEAU FASCICULE DE BREVET EUROPEEN

(45) Date de publication et mention de la décision concernant l'opposition:
**11.02.1998 Bulletin 1998/07**

(51) Int. Cl.6: **B60K 41/04**

(45) Mention de la délivrance du brevet:
**24.02.1993 Bulletin 1993/08**

(21) Numéro de dépôt: **89402134.4**

(22) Date de dépôt: **27.07.1989**

(54) **Procédé de commande de modulation du couple d'un moteur thermique associé à une boîte de vitesses automatique**

Drehmoment-Modulationssteuerungsverfahren für einen mit einem automatischen Getriebe verbundenen thermischen Motor

Torque modulation control process for a heat engine associated with an automatic transmission

(84) Etats contractants désignés:
**BE DE ES FR GB IT NL SE**

(30) Priorité: **18.08.1988 FR 8810980**

(43) Date de publication de la demande:
**21.02.1990 Bulletin 1990/08**

(73) Titulaire: **RENAULT**
**92109 Boulogne-Billancourt (FR)**

(72) Inventeur: **Leorat, François**
**F-78000 Versailles (FR)**

(74) Mandataire:
**Ernst-Schonberg, Michel et al**
**REGIE NATIONALE DES USINES RENAULT**
**Service 02 67**
**8-10, Avenue Emile Zola**
**92109 Boulogne-Billancourt (FR)**

(56) Documents cités:
EP-A- 0 011 088        DE-A- 2 935 916
DE-A- 3 507 126        FR-A- 2 154 235
US-A- 4 512 307

• **Bosch Technische Berichte 7,1983 p. 166-174**

EP 0 355 070 B2

## Description

La présente invention se rapporte à un procédé de commande modulation du couple d'un moteur thermique qui est associé à une boîte de vitesses automatique, notamment pour véhicules automobiles de tourisme.

On sait que le principal problème qui se pose dans les boîtes de vitesses automatiques est celui de la qualité du passage des vitesses. Il faut'alors faire un compromis entre la réduction du temps de passage de ces vitesses et le confort de passage.

La publication BOSCH TECHNISCHE BERICHTE 7 (1983) pages 166 à 174 décrit un procédé de commande du couple d'un moteur lors des passages de vitesses. Selon ce procédé, le boîtier de commande de la boîte de vitesses délivre un ordre responsable d'une modification appropriée de la cartographie de l'allumage du moteur.

Le but de la présente invention est de proposer un procédé de commande de modulation du couple d'un moteur thermique associé à une boîte de vitesses automatique permettant de réduire le temps de passage à confort constant ou d'améliorer le confort sans augmenter le temps de passage grâce à la maîtrise des signaux de commande.

L'invention concerne un procédé de commande de modulation du couple d'un moteur thermique associé à une boîte de vitesses automatique, consistant à réduire le couple moteur lors des passages de vitesses sur l'ordre d'au moins un signal transmis par le boîtier de commande de la boîte de vitesses automatique à un organe de commande du moteur. Ce procédé est caractérisé par les caractéristiques de la partie caractérisante de la revendication 1.

Selon un mode de réalisation de l'invention, l'organe de commande du moteur, qui reçoit le signal de modulation du couple en provenance du boîtier électronique de commande de la boîte de vitesses automatique, est le boîtier d'allumage du moteur à allumage commandé.

Selon un mode de réalisation de l'invention, l'organe de commande du moteur, qui reçoit le signal de modulation du couple en provenance du boîtier électronique de commande de la boîte de vitesses automatique, est le boîtier de commande de la pompe d'injection Diesel électronifiée.

Le présente invention présente ainsi l'avantage d'offrir un perfectionnement au pilotage des boîtes de vitesses automatique au moyen d'une liaison unidirectionnelle, unifilaire, par signal tout ou rien simplement modulé en durée.

D'autres caractéristiques et avantages de la présente invention ressortiront de la description qui suit le mode de réalisation donné à titre d'exemple en référence aux dessins annexés sur lesquels :

- La figure 1 représente les courbes de la variation de la vitesse moteur et du signal de modulation en fonction du temps pour les passages montants pour tous types de moteurs ;

- La figure 2 représente les courbes de la variation de la vitesse moteur et du signal de modulation en fonction du temps pour les passages descendants pour moteur à allumage commandé et moteur Diesel à pompe d'injection électronifiée ;

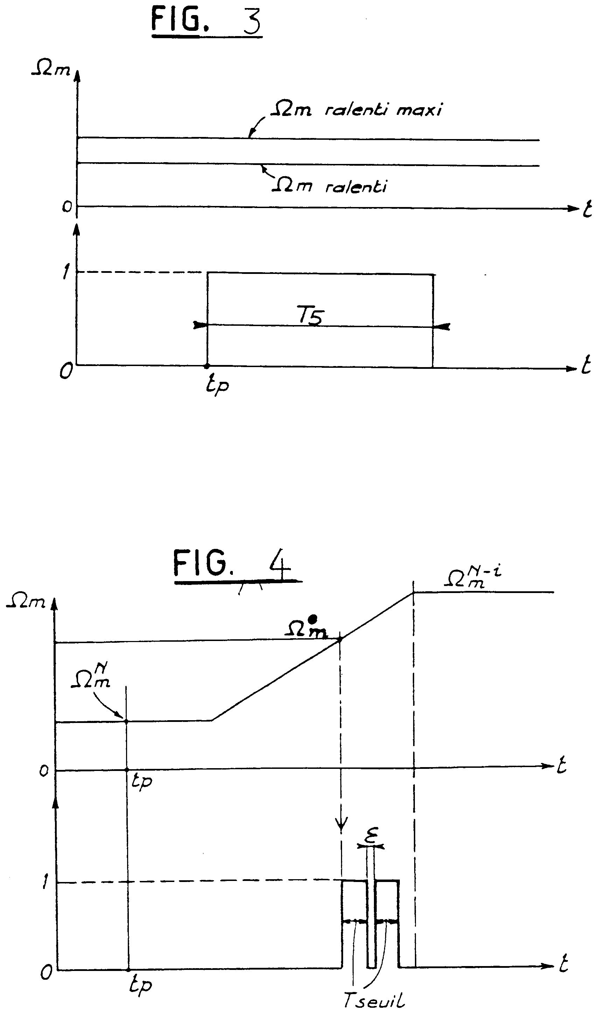

- La figure 3 représente les courbes du même genre que celles de la figure 1, pour les positions "Neutre" ou "Parcage" de la boîte de vitesses automatique, dans le cas du moteur à allumage commandé et du moteur Diesel à pompe d'injection électronifiée ;

- La figure 4 représente a courbe du même genre que celles de la figure 1 pour les passages descendants pour tous types de moteurs, dans une variante de l'invention.

Le procédé de commande de modulation du couple d'un moteur thermique selon l'invention est associé à une boîte de vitesses automatique gérée par un boîtier électronique de commande. Ce boîtier électronique de commande agît sur un organe de commande dudit moteur au moyen d'une liaison unidirectionnelle et unifilaire, par un signal tout ou rien modulé en largeur, afin d'agir sur le couple moteur lors du passage des vitesses.

Pour le moteur à allumage commandé, le boîtier d'allumage est l'organe de commande qui reçoit le signal de modulation du couple en provenance du boîtier électronique de commande de la boîte de vitesses automatique.

Pour le moteur Diesel à pompe d'injection électronifiée, le boîtier de commande de ladite pompe est l'organe de commande qui reçoit le signal de modulation du couple en provenance du boîtier électronique de commande de la boîte de vitesses automatique.

Pour les passages en montant du rapport N au rapport N + 1, pour tous les types de moteur, le signal de modulation est un signal unique pendant une durée T. Cette durée T est comprise entre une durée minimale T seuil et une durée maximale T max. Le temps initial et le temps final sont déterminés par l'information vitesse moteur $\Omega$ m de manière que :

$$\Omega_m^{\text{début}} = k_1 \cdot \Omega_m^{\text{max}}$$

$$\Omega_m^{\text{fin}} = k_2 \cdot \Omega_m^{\text{max}}$$

où $k_1$ et $k_2$ sont des constantes telles que $k_2$ est plus petite que $k_1$ et
où $\Omega_m^{\text{max}}$ représente la valeur maximale atteinte par la vitesse moteur $\Omega_m$ dans les premiers instants du passage du rapport N au rapport N + 1.

Pour les passages en descendant du rapport N aux rapports N - 1 ou N - 2 du moteur à allumage commandé et du moteur Diesel à pompe d'injection électronifiée, le signal de modulation est un signal double avec chacune des durées, égale à la durée T seuil définie précédemment.

Le début du premier signal se produit à l'issue d'une durée $T_1$ par rapport au début du passage du rapportN au rapport N - 1 ou N- 2, et les deux signaux sont séparés par une durée $T_2$ telles que :

$$T_1 = f_1 \text{ (passage N/N - i, } \Omega_m)$$

$$T_2 = f_2 \text{ (passage N/N - i, } \Omega_m)$$

où $f_1$ et $f_2$ sont des fonctions 1 et 2 et i = 1, 2.

Dans une autre réalisation, $T_1$ et $T_2$ sont détermi- nées par les instants où :

$$\Omega_m^{début} = k'_1 \cdot \Omega_m^N$$

$$\Omega_m^{fin} = k'_2 \cdot \Omega_m^N$$

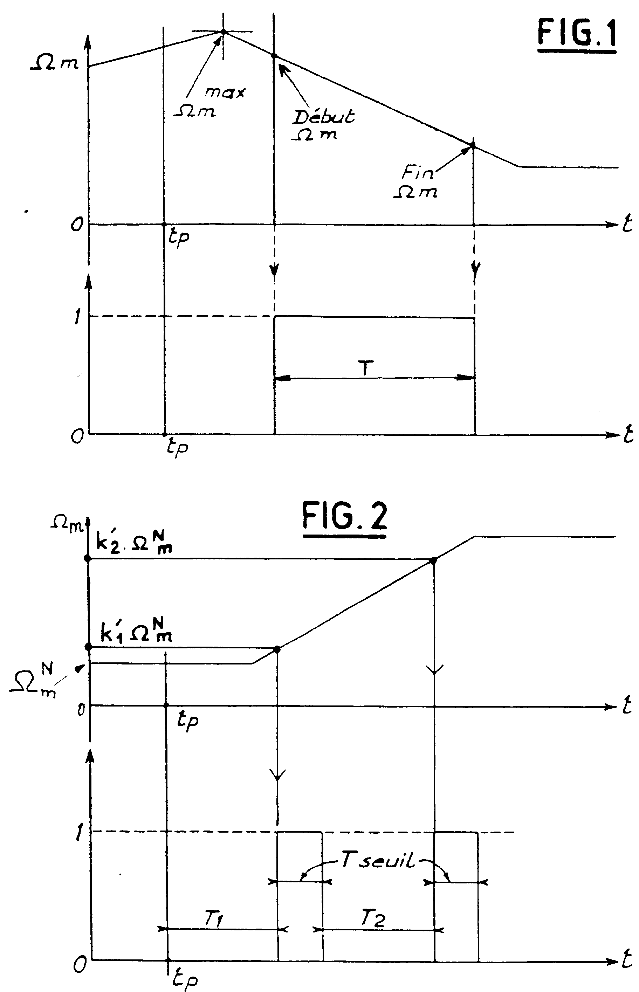

où $k'_1$ et $k'_2$ sont des constantes, $\Omega_m^N$ étant la vitesse moteur juste au début du passage, comme cela est représenté sur la figure 2.

Pour les positions "Neutre" et "Parcage" de la boîte de vitesses automatique, dans las du moteur à allumage commandé et du moteur Diesel électronifié, le signal de modulation est un signal unique d'une durée $T_5$ plus grande qu'une durée maximale $T_{max}$, à condition que la vitesse moteur $\Omega_m$ soit inférieure à la vitesse moteur de ralenti maximale $\Omega_m^{ralentimax}$, et que l'ouver- ture de l'alimentation en carburant $\alpha_c$ soit inférieure à une value de seuil $\alpha_c^{seuil}$ :

$$T_5 > T_{max}$$

$$\Omega_m < \Omega_m^{ralentimax}$$

$$\alpha_c < \alpha_c^{seuil}$$

Une variante de l'invention, pour tous les types de moteurs et pour les passages en descendant du rapport N au rapport N = i, i = 1,2, se caractérise par un signal de modulation qui est un signal double avec chacune des durées égale à la durée de seuil $T_{seuil}$ (voir la figure 5).

Les deux signaux sont séparés par une durée constante ε, le signal de modulation étant déclenché lorsque la vitesse moteur $\Omega_m$ est égale à une valeur $\Omega_m^e$ définie par la relation :

$$\Omega_m^e = k_5 \cdot \Omega_{Vh}^N$$

où $\Omega_{Vh}^N$ = vitesse du véhicule sur le rapport N juste avant le passage, $k_5$ étant une constante appro- priée.

## Revendications

1. Procédé de commande de modulation du couple d'un moteur thermique associé à une boîte de vitesses automatique, consistant à réduire le couple moteur lors des passages de vitesses montants et descendants sur l'ordre d'au moins un signal de commande transmis par le boîtier de commande de la boîte de vitesses automatique à un organe de commande du moteur, caractérisé en ce que le signal de commande est un signal tout ou rien modulé en durée, transmis au moyen d'une liaison unidirectionnelle et unifilaire, en ce que pour les passages en descendant du rapport N au rapport N-1 ou N-2, le signal de modulation est un signal double avec chacune des durées égale à une durée de seuil Tseuil, et en ce que, pour les passages en montant du rapport N au rapport N + 1, le signal de modulation est un signal unique d'une durée T comprise entre la durée minimale Tseuil et une durée maximale Tmax, les temps initial et final étant déterminés par l'information vitesse moteur $\Omega_m$ de manière que :

$$\Omega_m^{début} = k_1 \cdot \Omega_m^{max}$$

$$\Omega_m^{fin} = k_2 \cdot \Omega_m^{max}$$

où $k_1$ et $k_2$ sont des constantes telles que $k_2$ est plus petit que $k_1$, et

où $\Omega_m^{max}$ représente la valeur maximale atteinte par la vitesse moteur $\Omega_m$ dans les pre- miers instants du passage du rapport N au rapport N + 1.

2. Procédé de commande selon la revendication 1, caractérisé en ce que l'organe de commande du moteur, qui reçoit le signal de modulation du couple en provenance du boîtier électronique de commande de la boîte de vitesses automatique, est le boîtier d'allumage du moteur à allumage commandé.

3. Procédé de commande selon la revendication 1, caractérisé en ce que l'organe de commande du moteur qui reçoit le signal de modulation du couple en provenance du boîtier électronique de commande de la boîte de vitesses automatique est le boîtier de commande de la pompe d'injection Diesel électronifiée.

4. Procédé de commande selon l'une des revendications 1, 2 ou 3, caractérisé en ce que, pour les passages en descendant du rapport N au rapport N - 1 ou N - 2, le début du premier signal se produit à l'issue d'une durée $T_1$ par rapport au début du passage du rapport N au rapport N - 1 ou N - 2, et les deux signaux étant séparés par une durée $T_2$ telles que :

$$T_1 = f_1 \text{ (passage N/N-i, } \Omega_m)$$

$$T_2 = f_2 \text{ (passage N/N-i, } \Omega_m)$$

où $f_1$ et $f_2$ sont des fonctions 1 et 2 et i = 1, 2

5. Procédé de commande selon la revendication 1, 2 ou 3, caractérisé en ce que, pour les passages en descendant du rapport N au rapport N - 1 ou N - 2, le début du premier signal se produit à l'issue d'une durée $T_1$ par rapport au début du passage du rapport N au rapport N - 1 ou N - 2, les deux signaux étant séparés par une durée $T_2$, les durées $T_1$ et $T_2$ étant respectivement déterminées par les instants où :

$$\Omega_m^{\text{début}} = k'_1 \cdot \Omega_m^N$$

$$\Omega_m^{\text{fin}} = k'_2 \cdot \Omega_m^N$$

avec $k'_1$, $k'_2$ = constantes.

6. Procédé de commande selon l'une des revendications 1, 2 ou 3, caractérisé en ce que, pour les positions "Neutre" et "Parcage" de la boîte de vitesses automatique, le signal de modulation est un signal unique d'une durée $T_5$ plus grande qu'une durée maximale $T_{\text{max'}}$, à condition que la vitesse moteur $\Omega_m$ soit inférieure à la vitesse moteur de ralenti maximale $\Omega_m^{\text{ralenti max}}$, et que l'ouverture du système d'alimentation en carburant $\alpha_c$ soit inférieure à une valeur de seuil $\alpha_c^{\text{seuil}}$ :

$$T_5 > T_{\text{max}}$$

$$\Omega_m < \alpha_m^{\text{ralenti max}}$$

$$\alpha_c < \alpha_c^{\text{seuil}}$$

7. Procédé de commande selon l'une des revendications 1, 2 ou 3, caractérisé en ce que, pour les passages en descendant du rapport N au rapport N - i, i = 1, 2, les deux signaux sont séparés par une durée constante $\varepsilon$, le signal de modulation étant déclenché lorsque la vitesse moteur $\Omega_m$ est égale à une valeur :

$$\Omega_m^e \; ; \Omega_m^e \text{ étant définie par la relation :}$$

$$\Omega_m^e = k_5 \cdot \Omega_{Vh}^N$$

où :

$$\Omega_{Vh}^N$$

= vitesse du véhicule sur le rapport N juste avant le passage, $k_5$ est une constante appropriée.

## Claims

1. A torque modulation control method for a thermal engine associated with an automatic gear box, consisting in reducing the engine torque during upward and downward shifts at the instruction of at least one control signal transmitted by the control housing of the automatic gear box to an engine control member, characterised in that the control signal is an all-or-nothing signal modulated in duration, transmitted via a one-way and one-wire connected, and in that for downward shifts from the ratio N to the ratio N-1 or N-2, the modulation signal is a double signal, each of whose periods is equal to a threshold period $T_{\text{threshold}}$ and in that, for upward shifts from the ratio N to the ratio N+1, the modulation signal is a since signal of a period T between the minimum period $T_{\text{threshold}}$ and a maximum period $T_{\text{max}}$, the initial and final times being determined by the engine speed information $\Omega_m$ such that:

$$\Omega_m^{\text{beginning}} = k_1 . \Omega_m^{\text{max}}$$

$$\Omega_m^{\text{end}} = k_2 . \Omega_m^{\text{max}}$$

where $k_1$ and $k_2$ are constants such that $k_2$ is smaller than $k_1$ and where $\Omega_m^{\text{max}}$ represents the maximum value reached by the engine speed $\Omega_m$ in the initial moments of the shift from the ratio N to the ratio N+1.

2. A control method as claimed in claim 1, characterised in that the engine control member which receives the torque modulation signal from the electronic control housing of the automatic gear box is the ignition housing of the controlled ignition engine.

3. A control method as claimed in claim 1, characterised in that the engine control member which receives the torque modulation signal from the electronic control housing of the automatic gear box is the control housing of the electronic Diesel injection pump.

4. A control method as claimed in one of claims 1, 2 or 3, characterised in that for downward shifts from the ratio N to the ratio N-1 or N-2, the beginning of the first signal takes place at the end of a period $T_1$ with respect to the beginning of the shift from the ratio N to the ratio N-1 or N-2 and in that the two signals are separated by a period $T_2$ such that:

$$T_1 = f_1 \text{ (shift N/N = i, } \Omega_m)$$

$$T_2 = f_2 \text{ (shift N/N - i, } \Omega_m)$$

in which $f_1$ and $f_2$ are functions 1 and 2 and i = 1, 2.

5. A control method as claimed in claims 1, 2 or 3, characterised in that for downward shifts from the ratio N to the ratio N-1 or N-2, the beginning of the first signal takes place at the end of a period $T_1$ with respect to the beginning of the shift from the ratio N to the ratio N-1 or N-2, the two signals being separated by a period $T_2$, the periods $T_1$ and $T_2$ being respectively determined by the instants at which:

$$\Omega_m^{\text{beginning}} = k'_1 . \Omega_m^{N}$$

$$\Omega_m^{\text{end}} = k'_2 . \Omega_m^{N}$$

in which $k'_1$ and $k'_2$ are constants.

6. A control method as claimed in one of claims 1, 2 or 3, characterised in that for the "neutral" and "park" positions of the automatic gear box the modulation signal is a single signal of a period $T_5$ greater than a maximum period $T_{max}$, provided that the engine speed $\Omega_m$ is lower than the maximum engine idling speed $\Omega_m^{\text{idling max}}$ and that the opening of the fuel supply $\alpha_c$ is lower than a threshold value $\alpha_c^{\text{threshold}}$:

$$T_5 > T_{max}$$

$$\Omega_m < \Omega_m^{\text{idling max}}$$

$$\alpha_c < \alpha_c^{\text{threshold}}.$$

7. A method as claimed in one of claims 1, 2 or 3, characterised in that, for shifts downward from the ratio N to the ratio N = i, i = 1,2, the two signals are separated by a constant period $\varepsilon$, the modulation signal being triggered when the engine speed $\Omega_m$ is equal to a value $\Omega_m^e$ defined by the relationship:

$$\Omega_m^{e} = k_5 . \Omega_{Vh}^{N}$$

in which $\Omega_{Vh}^{N}$ is the speed of the vehicle at the ratio N just prior to the shift, $k_5$ being an appropriate constant.

**Patentansprüche**

1. Verfahren zur Steuerung der Modulation des Drehmomentes eines Verbrennungsmotors, dem ein automatisches Getriebe zugeordnet ist, bestehend aus einer Verringerung des Drehmomentes während der aufsteigenden und absteigenden Gangwechsel auf Befehl Wenigstens eines vom Steuergerät des automatischen Getriebes einer Steueranordnung des Motors zugeführten Steuersignals, dadurch gekennzeichnet, dass das Steuersignal ein zeitdauermoduliertes Alles- oder Nichts-Signal ist, das über eine Einweg- und Einkanal-Verbindung übertragen wird, dass beim absteigenden Wechsel vom Gang N zum Gang N-1 oder N-2 das Modulationssignal ein Doppelsignal ist, wobei die beiden Dauern gleich einer Schwellwertdauer Tseuil sind, und dass beim aufsteigenden Wechsel vom Gang N zum Gang N+1 das Modulationssignal ein einziges Signal einer Dauer T ist, die zwischen der Mindestdauer Tseuil und einer Höchstdauer Tmax liegt, wobei die Anfangszeit und die Endzeit durch die Information über die Motorgeschwindigkeit $\Omega_m$ derart festgelegt sind, dass gilt:

$$\Omega_m^{\text{Anfang}} = k_1 \cdot \Omega_m^{\text{max}}$$

$$\Omega_m^{\text{Ende}} = k_2 \cdot \Omega_m^{\text{max}}$$

wobei $k_1$ und $k_2$ Konstanten sind und $k_2$ kleiner als $k_1$ ist und wobei $\Omega_m^{\text{max}}$ den Maximalwert der Motorgeschwindigkeit $\Omega_m$ während der ersten Augenblicke des Wechsels vom Gang N zum Gang N+1 darstellt.

2. Verfahren zur Steuerung nach Anspruch 1, dadurch gekennzeichnet, dass die Steueranordnung des Motors, der das Modulationssignal des Drehmomentes vom elektronischen Steuergerät des automatischen Getriebes zugeführt wird, das Zündsteuergerät des Motors mit gesteuerter Zündung ist.

3. Verfahren zur Steuerung nach Anspruch 1, dadurch gekennzeichnet, dass die Steuerungsanordnung des Motors, der das Modulationssignal des Drehmomentes vom elektronischen Steuergerät des automatischen Getriebes zugeführt wird, das Steuergerät der elektronischen Diesel-Einspritzpumpe ist.

4. Verfahren zur Steuerung nach einem der Ansprüche 1, 2 oder 3, dadurch gekennzeichnet, dass während der absteigenden Wechsel vom Gang N zum Gang N-1 oder N-2 der Beginn des ersten Signals sich an das Ende einer Dauer $T_1$ bezüglich des Beginns des Wechsels vom Gang N zum Gang N-1 oder N-2 anschliesst, wobei die beiden Signale durch eine Dauer $T_2$ wie folgt getrennt sind:

$$T_1 = f_1 \text{ (Gangwechsel N/N-i, } \Omega_m)$$

$$T_2 = f_2 \ (\text{Gangwechsel N/N-i}, \ \Omega_m)$$

wobei $f_1$ und $f_2$ die Funktionen 1 und 2 und i = 1,2 ist.

5. Verfahren zur Steuerung nach einem der Ansprüche 1, 2 oder 3, dadurch gekennzeichnet, dass für die absteigenden Gangwechsel vom Gang n zum Gang N-1 oder N-2 der Beginn des ersten Signals sich an das Ende einer Dauer $T_1$ bezüglich des Beginns des Wechsels vom Gang N zum Gang N-1 oder N-2 anschliesst, wobei die beiden Signale durch eine Dauer $T_2$ getrennt sind und wobei die Dauern $T_1$ bzw. $T_2$ durch die Zeitpunkte bestimmt sind zu denen gilt

$$\Omega_m^{\text{Anfang}} = k'_1 \cdot \Omega_m^{N}$$

$$\Omega_m^{\text{Ende}} = K'_2 \cdot \Omega_m^{N}$$

mit $k'_1$, $k'_2$ = Konstanten.

6. Verfahren zur Steuerung nach einem der Ansprüche 1, 2 oder 3, dadurch gekennzeichnet, dass für die Stellungen Neutral und Parken des automatischen Getriebes das Modulationssignal ein einziges Signal ist, dessen Dauer $T_5$ grösser ist als eine Maximaldauer $T_{max}$, unter der Bedingung, dass die Motorgeschwindigkeit $\Omega_m$ kleiner als die maximale Verzögerungsgeschwindigkeit $\Omega_m^{\text{ralenti max}}$ ist, und dass die Öffnung der Brennstoffversorgungsanordnung $\alpha_c$ kleiner als ein Schwellwert $\alpha_c^{\text{seuil}}$ ist:

$$T_5 > T_{max}$$

$$\Omega_m < \Omega_m^{\text{ralenti max}}$$

$$\alpha_c > \alpha_c^{\text{seuil}}$$

7. Verfahren zur Steuerung nach einem der Ansprüche 1, 2 oder 3, dadurch gekennzeichnet, dass für die absteigenden Wechsel vom Gang N zum Gang N-i mit i = 1,2 die beiden Signale durch eine konstante Dauer $\varepsilon$ getrennt sind, wobei das Modulationssignal ausgelöst wird, wenn die Motorgeschwindigkeit $\Omega_m$ gleich einem Wert $\Omega_m^{e}$ ist, wobei $\Omega_m^{e}$ durch die folgende Beziehung definiert ist:

$$\Omega_m^{e} = k_5 \cdot \Omega_{Vh}^{N}$$

wobei $\Omega_{Vh}^{N}$ die Fahrgeschwindigkeit im Gang N kurz vor dem Gangwechsel ist und $k_5$ eine geeignete Konstante ist.

## FIG.1

$\Omega m$

max $\Omega m$

Début $\Omega m$

Fin $\Omega m$

$0$

$t_p$

$t$

$1$

$T$

$0$

$t_p$

$t$

## FIG.2

$\Omega_m$

$k'_2 . \Omega_m^N$

$k'_1 \Omega_m^N$

$\Omega_m^N$

$0$

$t_p$

$t$

$1$

$T$ seuil

$T_1$

$T_2$

$0$

$t_p$

$t$

7

## FIG. 3

## FIG. 4